# EUROPEAN PATENT APPLICATION

(11) **EP 3 961 567 A1**
(43) Date of publication of application: **02.03.2022**
(21) Application number: 20193062.5
(22) Date of filing: 27.08.2020
(51) Int. Cl.: G06T 7/33

(54) **APPARATUS, METHOD AND COMPUTER PROGRAM FOR REGISTERING PET IMAGES**

(71) Applicant: Koninklijke Philips N.V., 5656 AG Eindhoven (NL)
(72) Inventor: CAROLUS, Heike, 5656 AE Eindhoven (NL); KABUS, Sven, 5656 AE Eindhoven (NL); BIPPUS, Rolf Dieter, 5656 AE Eindhoven (NL); RENISCH, Steffen, 5656 AE Eindhoven (NL); SALOMON, Andre Frank, 5656 AE Eindhoven (NL)
(74) Representative: Philips Intellectual Property & Standards

(57) **Abstract**

The invention refers to an apparatus for registering PET images. The apparatus 110 comprises a) a providing unit 111 for providing a PET image data set, b) another providing unit 112 for providing two motion-type models comprising information on motions following different motion patterns, c) an adapting unit 113 for adapting each of the two motion-type models to an image of the PET image data set, d) an applying unit 114 for applying each of the two adapted motion-type models to the PET image data set resulting in a registered PET image data set, and f) a determination unit 115 for determining for the two motion models the registration quality of the registered PET image data set, wherein a final registered PET image data set is selected based on the quality. Thus, the invention provides an apparatus that allows for providing a PET image with an improved image quality.

## Description

### FIELD OF THE INVENTION

The invention relates to an apparatus, a method and a computer program for registering positron emission tomography (PET) images. Further, the invention relates to a PET imaging system for providing a PET image and comprising the apparatus for registering PET images.

### BACKGROUND OF THE INVENTION

PET images are an important diagnostic tool, in particular, for diagnosing a status of a cancer patient. However, PET images generally show only little anatomical context. For this reason, they are usually combined with a computed tomography (CT) acquisition to be able to localize findings in the PET image of the patient. The amount of anatomical context provided by a PET image depends on the radioactive tracer used for generating the radiation detected by a PET imaging system, but still all PET images show only little anatomical information. This leads in particular to difficulties if two PET images have to registered to each other, like when an overall PET image should be generated based on PET images reconstructed for different motion states of the patient, for instance, different breathing states.

It would thus be advantageous to provide a registration algorithm that allows for a more accurate registration of PET images corresponding to different motion states and thus leads to an overall PET image with an improved image quality.

### SUMMARY OF THE INVENTION

It is an object of the present invention to provide an apparatus, a PET system, a method and a computer program that allow for providing a PET image with an improved image quality.

In a first aspect of the invention, an apparatus for registering PET images is presented, wherein the apparatus comprises a) a PET image data set providing unit configured to provide a PET image data set comprising at least two PET images of a region of interest of a patient, wherein the PET image data set has been obtained by reconstructing a PET data set acquired at at least two motion states of the region of interest such that each PET image of the PET image data set corresponds to a motion state of the region of interest, b) a motion-type model providing unit configured to provide at least two motion-type models, wherein a motion-type model comprises information on a motion of the region of interest, and wherein each motion-type model comprises information on a motion following a different motion pattern, c) a motion-type model adapting unit configured to adapt each of the at least two motion-type models to at least one of the PET images of the PET image data set, d) a motion-type model applying unit configured to apply each of the at least two adapted motion-type models to the PET image data set resulting in a registered PET image data set for each motion-type model, wherein the applying of a motion-type model comprises registering the PET images of the PET image data set to each other based on the information on the motion of the region of interest provided by the respective adapted motion-type model and results in a registered PET image data set, and e) a registration quality determination unit configured to determine for each of the at least two motion models the registration quality of the respective registered PET image data set, wherein the quality determination is based on a quality measure determined based on the respective registered PET image data set, wherein a final registered PET image data set is selected from the registered PET image data sets based on the quality measure.

Since at least two motion-type models are provided and the registration of the PET image data set is performed based on each of the two motion type models, wherein then the quality of the registration is determined, the registered PET image data set with the highest quality can be selected. The generation of a final PET image based on the registered PET image data set with the highest quality thus leads to a final PET image which is based on the complete PET data set and on a very accurate correction of motion, in particular, breathing motion, in the final PET image. Therefore, a PET image with an improved quality can be provided.

The PET image data set providing unit can be a storing unit on which the PET image data set is stored already and from which the PET image data set can be retrieved for providing the same. The PET image data set providing unit can also be a receiving unit for receiving the PET image data set, for instance, from a PET image reconstructing unit, and for providing the received PET image data set. Moreover, the PET image data set providing unit can be part of or integrated with a PET imaging unit which is adapted to generate the PET image data set.

The PET image data set comprises at least two PET images of a region of interest of a patient. In a preferred embodiment, the PET image data set comprises a plurality of PET images of a region of interest of a patient. The region of interest of a patient can refer to an organ, a part of an organ of the patient, or to a part of the body of the patient, like a head, a torso or an abdomen of the patient. However, the region of interest of a patient can also refer to the whole body of the patient, wherein in this case the at least two PET images refer to whole body scans of the patient. The at least two PET images can refer to 2D or 3D images of the region of interest of the patient.

The PET images of the PET image data set are obtained by reconstructing a PET data set acquired at at least two motion states of a region of interest. Thus, the PET image of the PET image data set are reconstructed based on the PET data set. In particular, each PET image of the PET image data set is reconstructed to correspond to one of the at least two motion states of the region of interest. For example, if the region of interest comprises a lung of a patient, the acquisition of the PET data set is performed while the patient performs breathing motion. The PET data set can then be acquired, for instance, by acquiring PET data during a maximal exhale motion state and during a maximal inhale motion state of the lung. The PET images of the PET image data set correspond in this example then to one PET image showing the lung of the patient in the maximal exhale motion state and one PET image showing the lung of the patient in the maximal inhale motion state. However, also other motion states can be considered. Preferably, more than two motion states are considered, wherein in this case the PET image data set also comprises more than two PET images, i.e. one PET image for each considered motion state.

In a preferred embodiment, the acquired PET data set refers to a motion gated PET data set. In a motion gated PET data set, the PET data acquired by a PET imaging unit is sorted in accordance with a plurality of motion states. For example, a breathing motion of a person can be divided into a plurality of subsequent motion states, wherein PET data acquired during the performing of the breathing motion can then be sorted into the plurality of subsequent motion states, i.e. motion gates, for instance, based on a timing of the acquisition of the PET data and/or based on measurements of a motion sensor measuring the motion of the patient. When the PET data set refers to a motion gated PET data set, the PET image data set comprises a PET image reconstructed for each of the motion states utilized for the motion gated PET data set.

Also the motion-type model providing unit can be a storing unit, in which the motion-type models are stored already and from which the motion-type models can be retrieved for providing the same. The motion-type model providing unit can also be a receiving unit for receiving the motion-type models and for providing the received motion-type models. Each motion-type model comprises information on a motion of the region of interest. For example, if the region of interest refers to a lung of the patient, the motion-type model can comprise information on breathing motion performed by the lung. However, in another example, if the region of interest refers to a heart of the patient, the motion-type model can comprise information on a motion of a heart. Generally, a motion-type model can refer to any kind of data set that is indicative of the motion of the region of interest. For instance, the motion-type model can comprise one or more motion vector fields containing information on how the region of interest moves between at least two motion states in two or three dimensions. In particular, a motion vector field defines a motion vector for each region, for instance, for each pixel or voxel, of an image of the region of interest, wherein the motion vector defines the movement of the respective region that transforms the region of interest from one motion state to the other. Such a motion vector field can be derived, for instance, by determining the distance and direction that a region has moved in relation to other regions from one motion state to another motion state. However, the motion-type model can also comprise at least two 2D or 3D images of the region of interest showing the region of interest at different motion states and thus allowing to derive the motion performed between one motion state and the next. Additionally or alternatively, a motion-type model can also comprise a 2D or 3D spline model of the region of interest clearly delineating the region of interest at different motion states. Moreover, the motion-type model can also refer to any combination of information, for example, can comprise images of the area of interest at different motion states and motion vector fields indicative of the motion performed between subsequent images. Moreover, the motion-type model can also comprise a transformation matrix or vector indicative of a rigid or affine transformation between at least two motion states. In this case, the transformation matrix or vector is defined such that if applied to an image of a first motion state it transforms the image to an image corresponding to a second motion state. For instance, the transformation matrix or vector can be provided alone or in combination with additional information, for instance, in addition to images of the region of interest, a vector motion field, etc. as motion-type model.

Each of the at least two motion-type models comprises information on a motion following a different motion pattern of the region of interest. The different motion pattern can be caused, for instance, by specific disabilities or diseases in the region of interest. However, the different motion patterns can also refer to different motion habits of patients or to typical motion patterns of specific patient groups. In a preferred example, the area of interest is a lung of a patient and the motion patterns refer to different breathing patterns. In an even more preferred embodiment, the different breathing patterns refer to at least one of an abdominal breathing pattern, a chest breathing pattern, a shallow breathing pattern, and a deep breathing pattern. These generally known breathing patterns mostly refer to different breathing habits of a patient, i.e. it is known that some persons have the habit of normally using an abdominal breathing pattern, whereas other patients have the habit of normally using a chest breathing pattern. However, the motion-type models can also refer to additional breathing patterns, for instance, breathing patterns caused by certain diseases like diseases that lead to a stiffening of the lung tissue found, for instance, in COPD patients, or to breathing patterns that are typical for patients with certain lung injuries. Moreover, if the area of interest refers to a different organ than the lung, the respective motion patterns can refer to typical motion patterns of this organ, for instance, the organ can be a heart of the person and the motion patterns can refer to different types of heart motion, for instance, a normal heart motion, or a heart motion of a heart suffering from a specific disease.

Preferably, the region of interest comprises an organ performing a regular and periodical movement or a repetitive motion, i.e. moves through a plurality of motion states that are repeated regularly after a certain time period. For this preferred embodiment, the motion-type model can comprise information on one or more motion cycles of the repetitive motion. However, in other embodiments the region of interest can also comprise an organ that performs typical motions which are, however, not periodical in the sense that the same motion states are always repeated after the same time. For example, the organ can generally comprise different motion states between which it can switch irregularly. In such a case, the motion-type model can comprise a model for each of the typical motion states and information indicative of the transitions between these motion states.

Motion-type models for different motion patterns, i.e. different motion types, can be acquired in a plurality of ways. For example, motion-type models can be acquired by generating CT images of persons showing this specific motion pattern, for instance, because they suffer from the respective disease causing the motion pattern. Based on such acquired CT images, a registration can be performed using any known registration algorithm, wherein from the registration information of the region of interest motion information, for instance, a motion vector field, can be derived. Alternatively, also medical models, for instance, virtual medical models, can be used for simulating the motion for different motion patterns and the simulations can then be used for deriving information on the motion, for instance, a motion vector field, for the region of interest. Generally, all motion-type models provided by the motion-type model providing unit are based on patient data different from the patient data of the current patient, i.e. are not based on motion data of the current patient. In particular, none of the motion-type models is determined from anatomical image data of the current patient, even if such anatomical image data might exist for the current patient.

The motion-type model adapting unit is configured to adapt each of the at least two motion-type models to at least one of the PET images of the PET image data set. Adapting the motion-type model to at least one PET image of the PET image data set in particular refers to adapting the region of interest of a motion-type model to the region of interest of an individual patient. For example, if the region of interest refers to a lung, the motion-type model comprising information on a movement of a lung can then be adapted such that this movement can be applied to the lung of the patient comprising a specific size, extent or volume or comprising any other specifics.

In a preferred embodiment, the adapting of the motion-type model to at least a PET image of the PET image data set comprises adapting the size of the region of interest in the motion-type model to the size of the region of interest in the at least one PET image of the PET image data set. For instance, scaling information on the scale of a motion-type model can be provided together with the motion-type model, wherein then, based on the size of the region of interest of the patient, the motion-type model can be scaled accordingly to fit to the scale of the region of interest of the patient. In a preferred embodiment, the adapting of the motion-type model to at least a PET image of the PET image data set comprises registering the motion-type model to the at least one PET image of the PET image data set. In particular, in this preferred embodiment, the motion-type model adapting unit is configured to adapt each of the at least two motion-type models to at least one of the PET images of the PET image data set by performing an affine transformation of the at least two motion-type models based on a registration between each of the two motion-type models with the at least one of the PET images of the PET image data set. For example, if the motion-type model comprises images of a region of interest in different motion states, at least one of these images can be used for registering the motion-type model to at least one of the PET images of the PET image data set, wherein the registered images are preferably in substantially the same motion state. The registering can then be used to adapt the motion-type model, for instance, by affine transformation, to the PET image data set. However, in cases in which the motion-type model does not comprise an image of the region of interest, other information can be provided that allows to map the information provided by the motion-type model to at least one of the PET images of the PET image data set and thus allows to adapt the motion-type model to fit to the at least one PET image of the PET image data set. Information allowing to map the motion-type model can refer, for instance, to providing landmarks at known points of the region of interest for the motion information of the motion-type model, wherein these landmarks are visible or can be provided also in the PET images. For example, the landmark can refer to an anatomical landmark that is generally known to be very well visible in PET images and can be provided as part of the motion-type model or can refer to artificial landmarks that are provided with the motion-type model at known locations, wherein a user, for instance, a physician, is made aware of the landmarks for the motion-type model and can then provide the artificial landmarks also during the acquisition of the PET image, for instance, by attaching a small radiation source to the body of the patient at a corresponding position.

In a particularly preferred embodiment, the adapting of the motion-type model to at least a PET image of the PET image data set is based on registering the motion-type model to an anatomical image of the region of interest of the patient. For example, it is common practice to acquire in addition to the PET image also an anatomical image, like a CT or MRT image, of the patient before, after or during the PET imaging procedure. Generally a relationship between the anatomical image and the PET image is known or can be determined by using known registration algorithms. Since both images are acquired from the same patient, i.e. from the same anatomy, even with very few anatomical context in the PET images a registration accuracy with a suitable accuracy can be achieved. The anatomical image of the patient can then be registered to the PET images very easily, due to the similarity of the anatomical structures in both images or based on landmarks, as described above. Thus, such an anatomical image of the region of interest, preferably registered to at least one of the PET images of the PET image data set, can be utilized for registering also the motion-type model to at least one PET image of the PET image data set.

The motion-type model applying unit is configured to apply each of the at least two adapted motion-type models to the PET image data set resulting in a registered PET image data set for each motion-type model. Thus, each motion-type model is applied independently of other motion-type models to the PET image data set such that based on each motion-type model a registered PET image data set is generated. For example, a first motion-type model, for instance, referring to a shallow breathing type, is applied to generate a first registered PET image data set, and a second motion type model, for instance, referring to a deep breathing type, is applied to generate a second motion type model. Thus, in this example the result of the applying of each motion-type model, are two different registered PET image data sets.

The motion-type model applying unit is adapted to register the PET images of the PET image data set to each other based on the information on the motion of the region of interest provided by the respective motion-type model. For example, the information provided by the motion-type model can be used to deform a PET image in accordance with the motion information such that it corresponds to a PET image of the region of interest in a different motion state. In a preferred embodiment, the applying of the motion-type model comprises initializing the registration of at least two PET images of the PET image data set with the motion-type model. For example, the motion-type model applying unit can be adapted to first determine a reference motion state and also a PET image of the PET image data set corresponding to the reference motion state to which all other PET images of the PET image data set should be registered. The motion-type model applying unit can then be adapted to deform a PET image of the PET image data set based on the information provided by the motion-type model such that it at least roughly corresponds to the reference motion state. The performed PET image can then be further registered with the reference PET image by applying known registration algorithms. Since a deformed PET image has already been deformed such that it roughly corresponds to the motion state of the region of interest in the reference motion state, the further registration process is applied to images that are already very similar. This allows to balance the drawback of PET images showing only few anatomical structures on which the registration can be based. Since a registration is based on already very similar images in this case even with only very few anatomical structures visible, a good registration result can be obtained. In a particularly preferred embodiment, a motion-type model comprises as information on the motion in the region of interest a motion vector field defining a positional translation between at least two different motion states of the region of interest, wherein applying a motion-type model to the PET image data set comprises registering the PET images of the PET image data set to each other by initializing the registration with the motion vector field provided by the motion-type model. Generally, the registration of the PET image data set refers to registering all PET images of the PET image data set to each other, i.e. to a reference PET image. Accordingly, the resulting registered PET image data set comprises registered PET images that are deformed such that they correspond all to only one motion state of the at least two motion states, i.e. to the reference motion state of the reference PET image.

The registration quality determination unit is configured to determine for each of the at least two motion-type models the registration quality of the registered PET image data set. In particular, since it might not be known for each patient which motion-type model is most suitable for this individual patient, as described above, at least two motion-type models are utilized for registering the PET image data set. However, it has then to be determined which of the motion-type models provides the best registration result on which, for instance, the generation of a final PET image can be based. The registration quality determination unit is adapted to base the quality determination on a quality measure that is determined for each of the registered PET image data sets. The final registered PET image data set, from which, for instance, a final PET image can be generated, is then selected from all the registered PET image data sets based on the quality measure. The quality measure can refer to any measure that allows to determine the quality of the registration of the PET images of a registered PET image data set. Generally, the quality measure can refer to a simple quality measure value derived from the registered PET images, for instance, by averaging, to a quality measure vector comprising more than one value indicative of the quality of the registration, or even to a 2D or 3D quality measure image comprising image values indicative of a registration quality, for instance, in different regions of the registered PET images. The comparison of the determined quality measures can then be based on known comparison mechanisms, like determining a difference, a distance metric, comparison to one or more thresholds, etc.

In a preferred embodiment, the quality measure is determined based on a residual image determined by subtracting a registered image of the registered PET image data set from another of the registered images of the registered PET image data set. In particular, the quality measure can directly refer to the residual image. Since all registered PET images of the registered PET image data set deformed during the registration such that they refer to each other, i.e. to one selected reference PET image, for an exact registration all registered PET images would be exactly the same, i.e. the residual image would comprise only zero as image value. However, in reality, for instance, due to utilizing a motion-type model that is not fitting for the patient and/or also due to noise present in the image, the registered PET images show some deviations which are in particular visible in a residual image. Thus, the quality of the registration of the registered PET image data set can be determined as a deviation of the residual image from zero. The quality measure can refer, for instance, to some kind of averaged or weighted averaged value of all image values of the residual image. The residual image can then be selected, as the difference between two predetermined or arbitrary registered PET images, or the residual image can be determined between all registered PET images. The quality measure can then refer, for instance, to an averaged or weighted averaged value of the image values of only one residual image or of all residual images. However, the quality measure can also be determined, for instance, only for a particular predetermined area of the registered PET images, for instance, only for the region of interest. Moreover, also one or more residual images determined based on the registered PET image data set forming, for instance, a residual image data set, can be utilized directly for comparing the quality of the registration based on different motion-type models. This allows, for instance, to determine in more detail in which areas of the PET image a suitable registration quality was achieved with respect to each motion-type model which allows to determine which of the motion-type models is most suitable for an individual patient.

In another preferred embodiment, the motion-type model comprises a motion vector field and the quality measure refers to a deviation between the motion vector field of the motion-type model and a motion vector field derived during the registration process of the PET image data set. As discussed above, in a preferred embodiment, the motion vector field of the motion-type model is used, in particular, for initialization of the registration between two of the PET images of the PET image data set. The further registration of the two PET images can then be based, for instance, on anatomical references provided by the PET images and results in two registered PET images. From these two finally registered PET images, also a motion vector field can be derived. The motion vector field being part of the motion-type model and the motion vector field being the result of the registration process of the PET images can then be compared. The less the motion vector field derived from the registration process of the PET image data set deviates from the motion vector field of the motion-type model used for the initialization of the registration process, the more suitable is the respective motion-type model for the individual patient and the higher is the registration quality between the registered PET images. The deviation between the motion vector field of the motion-type model and the motion vector field derived during the registration process of the PET image data set can be determined, for instance, by subtracting the motion vector fields from each other pixel-wise, wherein the resulting deviation vector field can also be regarded as a residual vector field. From such a residual vector field, for instance, a single value can be derived as quality measure or the residual vector field itself can be utilized as quality measure.

In a preferred embodiment, the quality measure is indicative of changes of a number and/or size of lesions in the region of interest during a generation process generating an overall PET image from the registered PET image data set. If in a registration process the motion is not accurately corrected, lesions below a certain size will be visible in each of the individual registered PET images but will, due to the incorrect motion correction, be lost, for instance, smeared out, when generating an overall PET image based on the registered PET image data set, for instance, by merging or overlying the PET images of the registered PET image data set. Thus, for determining the quality measure, a number and/or size of lesions visible in at least one registered PET image can be determined and compared to the number and/or size of lesions determined in the overall PET image resulting from the generation process. Additionally or alternatively, an intermediate overall PET image can be utilized that is generated, for instance, by merging only some of the registered PET images of the registered PET image data set. Moreover, the changes of the number and/or size of lesions in the region of interest can also be monitored during the PET image generation process such that for an additional merging of one more registered PET image to an intermediate overall PET image the resulting change of the numbers and/or sizes of the lesions is determined. In this embodiment, the more changes of the number and/or size of the lesions are determined during the generation of the overall PET image, the less suitable is the motion-type model for the registration of the PET images.

Based on the chosen quality measure, for instance, based on one of the quality measures discussed above, the final registered PET image data set can be selected, in particular, such that it refers to the registered PET image data set with the highest quality as determined by the quality measure. However, the registration quality determination unit can also be adapted to compare the quality measures of each registered PET image data set to a quality threshold, wherein, if the quality measure lies below or above, depending on the quality measure, the quality of the registered PET image data set is regarded as not being suitable for generating a final PET image. In this case, the respective registered PET image data set cannot be selected as final registered PET image data set. Preferably, in a case, in which none of the registered PET image data sets comprises a quality measure above or below the threshold, the registration quality determination unit is adapted to inform a user that none of the motion-type models is suitable for registering the PET image data and/or to search for additional motion-type models, for instance, in a database comprising a plurality of motion-type models and to again perform the adapting of the motion-type models, the registration of the PET image data set based on the motion-type models and the determination of a quality measure until at least one motion-type model is found that leads to a registered PET image data set with a quality measure indicating a suitable quality.

From the selected final registered PET image data set, one final PET image can be generated, for instance, by utilizing a PET image generation unit that can optionally also be part of the above discussed apparatus. The final PET image can be generated by merging all PET images of the registered PET image data set in a known manner, for instance, as discussed above with respect to the overall PET image. Alternatively, the registered PET image data set can also be directly provided to a user, for instance, if indicative of subsequent time frames, in form of a video or sequence of PET images. This can be advantageous, for instance, if a development, for instance, of a tracer element, in the region of interest should be observed.

In an embodiment, the apparatus further comprises a motion-type model selection unit for selecting the at least two motion-type models from a plurality of motion-type models, wherein the selection is based on known patient characteristics. For instance, the motion-type model selection unit can be connected to a motion-type model storing unit in which the plurality of different motion-type models is stored and from which the motion-type model selection unit can select the at least two motion-type models to provide the selected at least two motion-type models to the motion-type model providing unit. The selection of the motion-type models that are utilized for the registration process is based on known patient characteristics. For example, if it is known that the patient typically shows a shallow breathing pattern, the motion-type model selection unit can select all motion-type models that refer to a shallow breathing type. The patient characteristics can refer to any characteristics of the patient that can have an influence on the motion patterns in the region of interest of the patient. For example, the patient characteristics can refer to an already known motion pattern performed by the patient, a size, a weight, an age, etc. Moreover, also already known constraints or diseases can be taken into account as patient characteristics for selecting the motion-type models. For example, if it is already known that the patient suffers from COPD, respective motion-type models can be selected by the motion-type model selection unit.

In an embodiment, the PET image data set further comprises information indicative of a gating signal defining the different motion states of the region of interest, and wherein the motion-type model comprises information on positional transitions between at least two different motion states, wherein the application of a motion-type model to the PET image data set is further based on the information indicative of the gating signal. The gating signal can refer, for instance, to an EKG signal, a breathing signal, an acceleration signal, or any other signal that is indicative of the motion in the region of interest and is not derived from the PET image data set. The motion states for which the PET images of the PET image data set are determined can then be determined in the gating signal such that each PET image of the PET image data set can be assigned to a typical characteristic of the gating signal. This typical characteristic of the motion states in the gating signal can then also be provided as information in the motion-type model to indicate, for instance, which motion states are provided as part of the motion-type model. This information can then be utilized to map the motion-type model to the PET image data set. For example, this information can be used for applying the motion information of the motion-type model corresponding to the same motion state of the two PET images that should be registered.

In another aspect of the invention, a PET imaging system for providing a PET image is presented, wherein the system comprises a) a PET imaging unit adapted to acquire a PET data set at at least two motion states of a region of interest of a patient, b) a PET image reconstructing unit adapted for reconstructing from the PET data set a PET image data set such that each PET image of the PET image data set corresponds to a motion state of the region of interest, and c) an apparatus for registering the PET images of the PET image data set as described above.

In another aspect of the invention, a method for registering PET images is presented, wherein the method comprises a) providing a PET image data set comprising at least two PET images of a region of interest of a patient, wherein the PET image data set has been obtained by reconstructing a PET data set acquired at at least two motion states of the region of interest such that each PET image of the PET image data set corresponds to a motion state of the region of interest, b) providing at least two motion-type models, wherein a motion-type model comprises information on a motion of the region of interest, and wherein each motion-type model comprises information on a motion following a different motion pattern, c) adapting each of the at least two motion-type models to at least one of the PET images of the PET image data set, d) applying each of the at least two adapted motion-type models to the PET image data set resulting in a registered PET image data set for each motion-type model, wherein the applying of a motion-type model comprises registering the PET images of the PET image data set to each other based on the information on the motion of the region of interest provided by the respective adapted motion-type model and results in a registered PET image data set, and e) determining for each of the at least two motion models the registration quality of the respective registered PET image data set, wherein the quality determination is based on a quality measure determined based on the respective registered PET image data set, wherein a final registered PET image data set is selected from the registered PET image data sets based on the quality measure.

In another aspect of the invention, a computer program product for registering PET images is presented, wherein the computer program product comprises program code means for causing the apparatus as described above to execute the method as described above.

It shall be understood that the apparatus of claim 1, the PET imaging system of claim 13, the method of claim 14, and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily an embodiment of a PET imaging system for providing a PET image comprising an apparatus for registering PET images,
Fig. 2 exemplarily illustrates an underlying principle of the apparatus, and
Fig. 3 shows a flowchart exemplarily illustrating an embodiment of a method for registering PET images.

### DETAILED DESCRIPTION OF EMBODIMENTS

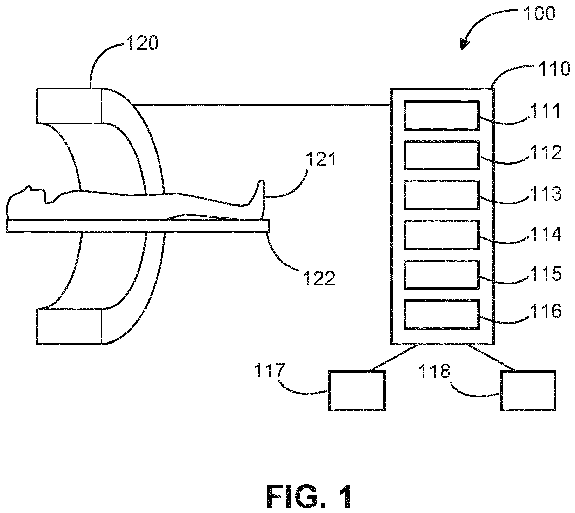

Fig. 1 shows schematically and exemplarily an embodiment of a PET imaging system 100 comprising an apparatus for registering PET images. The PET imaging system 100 comprises a PET imaging unit 120 for acquiring a PET data set of a patient 121 lying on a patient support 122. For acquiring the PET data set, the patient 121 has been injected before the data acquisition with a tracer comprising a radioactive substance emitting positrons that, within the body of the patient 121, combined with neighboring electrons to produce gamma rays. The gamma rays can then be detected by the PET imaging unit 120 for generating the PET data set.

The PET imaging system 100 further comprises an apparatus 110 for registering PET images. The apparatus 110 comprises a PET image data set providing unit 111, a motion-type model providing unit 112, a motion-type model adapting unit 113, a motion-type model applying unit 114 and a registration quality determination unit 115. Optionally, the apparatus 110 further comprises a final PET image generation unit 116. Further, the apparatus 110 can comprise an input unit 117, like a mouse, a keyboard, a touchscreen, etc. for providing input to the apparatus 110 and/or a display unit 118, like a display screen, for displaying PET images. The apparatus 110 can be realized on a general computation device, for instance, as software or dedicated hardware.

The PET image data set providing unit 111 is adapted to provide a PET image data set of the patient 121. The PET image data set provided by the PET image data set providing unit 111 is obtained by reconstructing the PET data set acquired by the PET imaging unit 120. In particular, the PET data set acquired by the PET imaging unit 120 can refer to a motion gated PET data set for which motion, in particular, periodical motion, of the patient 121 during the data acquisition is subdivided into a plurality of motion phases, wherein each detected PET data event is assigned to one of the motion phases. The assignment of the PET data events to the different motion phases can be based, for instance, on a motion signal of the patient 121 acquired during the PET data acquisition or on a known timing of the motion during the PET data acquisition. From the resulting motion gated PET data set, PET images can be reconstructed for each motion phase and provided as PET image data set to the PET image data set providing unit 111. The reconstruction of the PET data set to the PET image data set can be performed by the PET imaging unit 120 itself, a dedicated reconstruction unit not shown in Fig. 1 and/or by the PET image data set providing unit 111. Generally, the reconstruction can be based on any known reconstruction algorithm for reconstructing PET images from a PET data set. A suitable reconstruction algorithm can be found, for instance, in the article "Systematic and distributed time-of-flight list mode PET reconstruction.", Wang, W., et al., IEEE Nuclear Science Symposium Conference Record, Vol. 3, 2006. The PET image data set providing unit 111 can hence provide a PET image data set comprising PET images of a region of interest of the patient 121 corresponding to different motion phases to the motion-type model adapting unit 113.

The motion-type model providing unit 112 is adapted to provide motion-type models and can be, for instance, a storage unit storing a plurality of motion-type models. In a preferred embodiment, the apparatus 110 further comprises a motion-type model selection unit, not shown in Fig. 1, that is configured to select from the plurality of provided motion-type models at least two motion-type models. In particular, the motion-type model selection unit can be adapted to perform the selection based on known patient characteristics of the patient 121. For example, if the region of interest of the patient 121 that is imaged by the PET imaging unit 120 refers to a lung of the patient 121, patient characteristics can refer to an age, a size, and/or a weight of the patient 121, since these characteristics might have an influence on the size and performance of the lung of the patient 121. Moreover, known diseases that might affect a breathing motion of the patient 121, like COPD, can be utilized as patient characteristics for selecting at least two suitable motion-type models from the plurality of motion-type models. The motion-type models provided by the motion-type model providing unit 112 can be based, for instance, on a motion analysis of respective previous patients or even of healthy subjects. However, also theoretical simulations or considerations can lead to motion-type models that can be stored in the motion-type model providing unit 112. In a preferred embodiment, the motion-type models are acquired by providing a series of anatomical images, for instance, CT or MRT images, of a plurality of patients showing different motion types and extracting motion information from these acquired anatomical images.

Each motion-type model provided by the motion-type model providing unit 112 comprises information on a motion of the region of interest imaged by the PET imaging unit 120, wherein the motion information provided by each motion-type model is indicative of a different motion pattern of the region of interest. For example, if the region of interest refers to a lung of the patient 121, a motion-type model can comprise motion information on a lung of a patient showing an abdominal breathing pattern and another motion-type model can comprise motion information on a lung of a patient showing a chest breathing pattern. Moreover, also motion-type models comprising motion information on a lung of a patient showing a shallow breathing pattern or a deep breathing pattern or any combination of different breathing patterns can be provided. The motion-type model can provide the motion information in any suitable way that allows the extraction of the motion pattern and applying the motion pattern to PET images. In a preferred embodiment, the motion-type model comprises a series of anatomical images representative for different motion states of the region of interest of the patient 121. From these anatomical images, the motion performed by the region of interest between the representative anatomical images can be extracted, for example, in form of a motion vector field. In a preferred embodiment, the motion vector field being indicative of the motion between the different anatomical images of the region of interest is also provided as part of the motion-type model. However, the motion vector fields between different motion states of the region of interest can also be provided alone as motion-type model without providing the further anatomical images. At least two motion-type models are then provided by the motion-type model providing unit 112 to the motion-type model adapting unit 113.

The motion-type model adapting unit 113 is configured to adapt each of the provided motion-type models to the PET image data set, in particular, to at least one of the images of the PET image data set provided by the PET image data set providing unit 111. For example, one of the PET images of the PET image data set representing one motion phase of the region of interest of the patient 121 can be selected as reference PET image to which all other PET images of the PET image data set should be registered. In this case, the motion-type model adapting unit 113 can be configured to adapt the motion-type models to the reference PET image. The adapting of the motion-type model to the PET image data set refers in a preferred embodiment to adapting the size of the region of interest of the motion-type model to a size of a region of interest of the patient 121. In an even more preferred embodiment, the adapting refers to registering the motion-type model to the PET image data set, in particular, to the reference PET image of the PET image data set. If the motion-type model comprises anatomical information of the region of interest, the registration can be based on this anatomical information. However, the registration can also be based on predefined landmarks that are provided as part of the motion-type model and that can also be found in the PET images of the PET image data set. For example, the landmarks can refer to anatomical landmarks that are easily visible in PET images of the region of interest. However, the landmarks can also refer to artificial landmarks, wherein the position of the artificial landmarks is provided to a user, like a physician, such that the user can provide these artificial landmarks in the PET image, for instance, by providing markers on the patient 121 that are visible in the PET image or by setting the artificial landmarks in the PET images by hand using, for instance, the input unit 117. In a preferred embodiment, an anatomical image of the patient 121 was acquired before or simultaneously with the PET image data acquisition. In this case, it is common practice to register at least one of the PET images of the PET image data set to the anatomical image of the patient 121. The motion-type model adapting unit 113 can then be configured to adapt the motion-type models to the at least one PET image of the PET image data set by registering the motion-type model with the anatomical image of the patient 121 that is already registered to at least one of the PET images of the PET image data set. Examples for suitable registration algorithms for registering images, in particular, PET images and anatomical images, can be found in the articles "Comparing nonrigid registration techniques for motion corrected MR prostate diffusion imaging.", Buerger, C., et al., Medical physics 42.1: 69-80, 2015 and "Evaluation of 4D-CT lung registration.", Kabus, Sven, et al., International Conference on Medical Image Computing and Computer-Assisted Intervention. Springer, Berlin, Heidelberg, 2009.

The adapted motion-type model is then provided by the motion-type model adapting unit 113 to the motion-type model applying unit 114. The motion-type model applying unit 114 is configured to apply each of the adapted motion-type models to the PET image data set. In particular, the applying of a motion-type model comprises registering the PET images of the PET image data set to each other based on the information on the motion of the region of interest provided by the respective motion-type model. For example, the motion information provided by the motion-type model can be applied to each of the PET images of the PET image data set to transform each of the PET images to correspond to the reference PET image. In particular, if the motion-type model comprises a motion vector field indicating how to transform an image of a region of interest in one motion state to an image of the region of interest in another motion state, this motion vector field can be applied to PET images of the PET image data set corresponding to a respective motion phase of the region of interest. In cases in which motion states provided by the motion-type model differ from the motion states identified for the PET image data set, an interpolation of the motion information provided by the motion-type model to the motion states provided by the PET image data set can be utilized. In an example, the region of interest is a lung of the patient 121, and a motion-type model only comprises a motion vector field indicating the movement from a maximal exhalation state of the lung to the maximal inhalation state of the lung, whereas the PET image data set also comprises PET images corresponding to in between motion states of the lung lying somewhere in between the complete exhalation motion state and the complete inhalation motion state. In this case, knowledge on the timing of the different motion states identified for the PET image data set can be utilized to derive from the motion vector field of the motion-type model a plurality of motion vector fields representing the motion between each of the motion phases utilized in the PET image data set. For example, it can be assumed in this case that the motion of the region of interest, i.e. here the lung, refers to a linear motion between the maximal exhalation state and the maximal inhalation state. However, more sophisticated motion models can also be applied in such cases to derive the necessary information from the motion-type model. For example, if the motion states of motion vector fields or anatomical images of the motion-type model do not directly correspond to the motion states of the PET images of the PET image data set the motion-type model adapting unit 113 can be adapted to interpolate additional motion information, in particular, additional vector fields or anatomical images, from the information provided by the motion-type model. Preferably, the interpolation can be performed linearly or spline based over time.

In a preferred embodiment, the motion information provided by the motion-type models is utilized by the motion-type model applying unit 114 as initialization for the registration process of the PET image data set. For example, registration of one PET image of the PET image data set to a selected reference PET image of the PET image data set can be initialized by applying the respective motion information, for instance, a corresponding motion vector field, to the PET image of the PET image data set. The PET image of the PET image data set is then transformed by the motion information to a transformed PET image from which it can be expected that it already provides a very good approximation of the reference PET image of the PET image data set. Any known registration algorithm can then be utilized for registering the transformed PET image to the reference PET image. Since it can be assumed that the starting point for this registration, i.e. the transformed PET image, already provides a good approximation of the reference PET image, the following registration procedure can lead to a very accurate registration result without high computational efforts even if the anatomical information of a PET image is generally quite low. All, i.e. at least two, registered PET image data sets are then provided by the motion-type model applying unit 114 to the registration quality determination unit 115.

Optionally, in addition to the registered PET images, also a specific motion model for the region of interest of the patient 121 can be extracted from the registration process based on the registered PET image data set, wherein the specific motion model refers to a motion model that is specific for the respective patient 121. In this case, the quality of the registration of the registered PET image data set can be regarded as being the higher, the lower a difference between the motion-type model and the specific motion model is.

The registration quality determination unit 115 is configured to determine for each of the registered PET image data sets a registration quality. In particular, a quality measure is determined for each of the registered PET image data sets based on the respective registered PET image data set. The quality measure can refer to any kind of quality measure that allows to determine a quality of the registration of the registered PET image data sets. For example, as already described above, the applied motion-type model can be compared with a specific motion model derived from the registered PET image data set resulting in a quality measure that allows an estimation of the quality of the registered PET image data set. For example, the comparison can comprise subtracting for each motion phase and thus each registration process between two images of the registered PET image data set a motion vector field of the motion-type model used for initializing the registration process from the specific motion vector field resulting from the complete registration of the two images. A measure can then be derived from the resulting difference vector fields, for instance, by averaging the resulting vector fields over all registered PET images, wherein in this case the quality of the registered PET image data set can be regarded as being the higher, the lower the quality measure is, i.e. the less different the motion vector fields are.

In another example, the quality measure can be determined based on a residual image determined by subtracting a registered PET image of the registered PET image data set from another of the registered PET images of the registered PET image data set. In particular, each registered PET image of the registered PET image data set can be subtracted from the reference PET image. Since the registered PET images should have been registered to each other, a subtraction should result in an image including only zeros, i.e. a zero image, if the registration was absolutely accurate. Thus, from the residual images a quality measure can be derived, for instance, by averaging over all image values of the residual images, wherein in this case the quality of the registration is the higher, the lower the quality measure is, i.e. the fewer differences can be found between the registered PET images of the registered PET image data set.

In another example, a quality measure can also be derived from determining the size and/or number of lesions visible in the registered PET images compared to the size and number of lesions visible in a PET image generated by merging the registered PET images. Since the registered PET images of the registered PET image data set should, after the registration, all refer to the same reference motion state, an overall PET image can be generated by merging, for instance, by simply or weighted voxel-wise summing, of the registered PET images. However, in a situation in which a registration is not very accurate, for instance, performed based on a not suitable motion-type model, the generation of the overall PET image will also lead to inaccuracies in the overall PET image. In particular, small lesions will not be merged accurately and thus will be "smeared out" such that during the generation of the final PET image these small lesions become less visible compared to their visibility in one of the registered PET images. Thus, by comparing the number and/or size of lesions visible in at least one of the registered PET images with the number and/or size of lesions visible in the overall PET image or any intermediate result of the generation of the overall PET image, the quality of the registration process can be monitored. In particular, if the number of lesions of a registered PET image is higher than the number of lesions in the overall PET image, the quality of the registration can be considered as being low. The difference between the number of lesions can in this case be utilized as quality measure. Additionally or alternatively also the size of a lesion visible in at least one of the registered PET images can be utilized. For example, due to an inaccurate registration lesions will "smear out" and thus increase their size in merged PET images. Thus, a difference, in particular, an increase, in size of one or more lesions between the registered PET images and the overall PET image or any intermediate result of the generation of the overall PET image can be utilized as quality measure, wherein the quality is the better the smaller the size difference is.

Generally, more than one quality measure can be determined for each registered PET image data set. For example, all three above mentioned quality measures can be determined for each registered PET image data set. Based on one or more quality measures determined for each registered PET image data set, a final registered PET image data set can then be selected. In particular, the final registered PET image data set is selected as the registered PET image data set with the highest registration quality. However, also a threshold can be provided for the quality measure, wherein, if none of the registered PET image data sets comprises a quality measure that compared to the threshold indicates a suitable registration quality, the registration quality determination unit 115 can be adapted to inform a user of the apparatus 110, for instance, through the display unit 118. A user can then decide whether he wants to accept one of the registration PET image data sets as final registration PET image data set irrespective of the low registration quality or whether he wants to take another action, for instance, try to find a more suitable motion-type model. Moreover, the registration quality determination unit 115 can also be adapted to automatically notify the motion-type model providing unit 112 to provide at least two other motion-type models and the apparatus 110 can be adapted to again perform the adapting and applying of the motion-type models until at least one motion-type model is found that results in registered PET image data with a suitable registration quality.

Optionally, the apparatus 110 can comprise a final PET image generation unit 116 that is adapted to utilize the final registered PET image data set to generate a final PET image. The merging of the final registered PET images of the final registered PET image data set can be performed, for instance, by simply adding the final registered PET images to each other pixel- or voxel-wise. Preferably, a weighted mean is determined as final PET image based on all final registered PET images by weighting each final registered PET image, summing the weighted PET images pixel- or voxel-wise, and then dividing the result, for instance, also pixel- or voxel-wise by the number of the final registered PET images. The weights used for determining the final registered PET image are preferably determined based on a determined registration quality for each respective final registered PET image, for instance, with respect to a the reference PET image. For example, the higher a registration quality between a reference PET image in the final registered PET image set and a final registered PET image is, the higher the final registered PET image can be weighted in the generation of the final PET image. The same methods for merging the final registered PET images to generate the final PET image can be applied when determining an overall PET image or any intermediate result of the generation of the overall PET image for determining a registration quality by the registration quality determination unit 115. However, the merging methods can also be different for the quality determination and the generation of the final PET image. In particular, for the quality determination a less computational expensive method can be utilized than for generating the final PET image. Preferably, the registration quality determination unit 115 can be adapted to determine the registration quality measure by generating from the registered PET images a version with less image resolution and determine the registration quality based on the low resolution registered PET image data set, whereas the final PET image can be generated based on the full resolution registered PET image data set. Alternatively, the computational expenses can be reduced, for instance, by utilizing a simple mean merging method when determining the registration quality and utilizing a more complex weighted mean merging method for the final PET image.

However, the registration quality determination unit 115 can also be adapted to directly provide the final registered PET image data set to a user, for instance, via the display unit 118. This might in particular be suitable for cases in which a development, for instance, of an injected tracer, should be observed in the region of interest of the patient 121 with time.

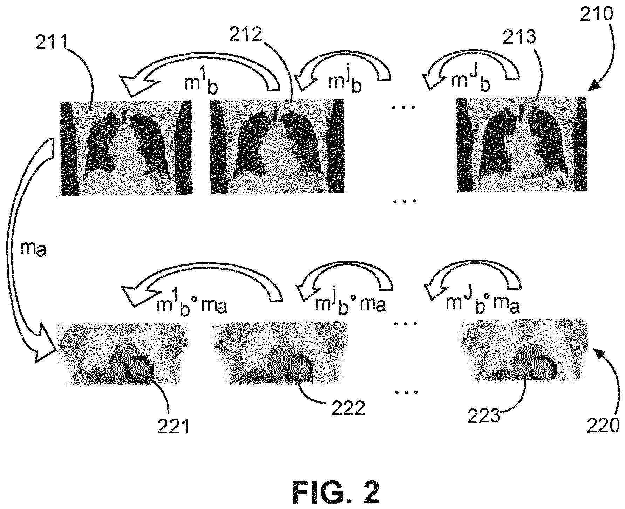

In the following, some principles underlying the present invention should exemplarily and schematically be explained with respect to Fig. 2. In an exemplary embodiment, the registration between the PET images of the PET image data set is initialized utilizing the respective motion-type model. Preferably, the motion-type model comprises the same type of motion information as a deformation model that is used by the registration algorithm that should be applied. For example, the motion-type model can comprise a motion vector field or a spline model. In a preferred embodiment, illustrated in Fig. 2, a motion-type model 210 comprises respiratory-gated, anatomical images of a patient showing a typical motion pattern, for instance, a typical abdominal breathing. The anatomical images 211, 212, 213 of the different gates, i.e. motion phases, of the motion-type model 210 can then be registered to each other, by registering each image 212, 213 to a selected reference anatomical image 211 corresponding to a selected reference motion phase. From this registration of the anatomical images 212, 213 of the motion-type model a plurality of motion vector fields can be derived. The plurality of resulting motion vector fields represents the typical breathing motion of a patient showing this breathing pattern and are stored as motion vector fields *m^{j}_{b}* with *j* being the index of the gate and *J* being the number of gates, i.e. the motion phase. In the next step, the reference anatomical image 211 used in the registration of the motion-type model images is registered to a reference PET image 221 of a PET image data set 220 resulting in a deformation *mₐ* of the motion-type model. By concatenation of the motion vector fields *m^{J}_{b}* with the deformation *mₐ,* the motion-type model can be applied to the PET image data set 220. In particular, a transformation of PET images 222, 223 based on the motion vectors fields *m^{J}_{b}* and the deformation *mₐ* can be used as initialization of a registration between the PET images 222, 223 and the reference PET image 221.

If the motion-type model comprises a different number of motion gates, i.e. motion phases, the motion-type model can be adapted to the PET image data set by utilizing a temporal interpolation. In case a sensor device, like a breathing device, is used, a correspondence of the motion gates of the motion-type model and the PET image data set can be obtained via the external sensor, for instance, breathing signal provided by the sensor device.

In a case no external sensor device is used and both, the motion-type model and the PET image data set, allow for reconstructing a time dependent image sequence, i.e. a 4D image, an internal gating signal can be extracted for the time dependent image sequence. The internal gating signals can then be registered according to corresponding respiratory states and the above procedure can then be used to apply the motion-type model to the PET image data set.

Generally, the motion-type model 210 can be provided by a database that was built for this purpose. This database can contain, for instance, motion-type models representing different breathing types, e.g., abdominal breathing, chest breathing, shallow breathing, deep breathing, etc. The motion-type models can be acquired from data from further patients showing typical breathing patterns. To facilitate the application of the motion-type model, the motion-type model can be restricted to comprise only the area of interest, in this example the lung.

For applying a motion-type model to the PET image data set a coarse delineation of the lung could be determined first. The lung can then also be delineated in an anatomical 2D or 3D image of the patient, if available. Based on this delineation the motion-type model can then be scaled to fit, i.e. to be adapted to, the PET image data set.

The registration can then be performed as discussed above several times using all selected or available motion-type models as input. Finally, the best fitting motion-type model, i.e. the registration PET image data set with the highest registration quality, is determined. Potential quality measures for this registration include but are not limited to, as already described above, residual images indicative of the quality of the registration result, a deviation of the specific motion model from the initial motion-type model indicative of how well the motion-type model fits at the beginning of the registration, a number and/or size of identifiable lesions, wherein when motion is corrected precisely, for instance, the number of lesions with a standardized uptake value greater than 3 will increase and their size will decrease due to reduced blurring. Based on at least one of these quality measure the final registered PET image data set is then determined.

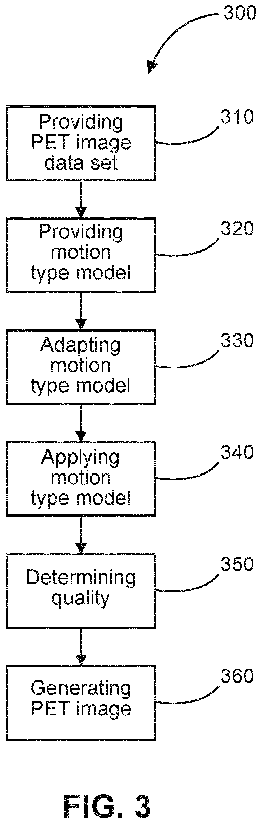

Fig. 3 shows schematically and exemplarily an embodiment of a method for registering PET images. In a first step 310, the method 300 comprises providing a PET image data set comprising a plurality of PET images of a region of interest of a patient 121. As already described above in detail, the PET image data set is obtained by reconstructing a motion gated PET data set acquired, for instance, by a PET imaging unit 120, such that each PET image of the PET image data set corresponds to a motion state of the region of interest of the patient 121. In a further step 320, at least two motion-type models are provided. As also already described above in detail, a motion-type model comprises information on a motion of the region of interest, wherein each motion-type model comprises information on a motion following a different motion pattern. The provided PET image data sets and the provided motion-type models are then utilized in step 330 for adapting each of the at least two motion-type models to at least one of the PET images of the PET image data set, respectively. In the following step 340, each of the at least two adapted motion-type models is applied to the PET image data set. As again also described in detail above, the applying of a motion-type model comprises registering the PET images of the PET image data set to each other based on the information on the motion of the region of interest provided by the respective motion-type model. The registered PET image data set is then utilized in step 350 to determine a quality measure and thus for determining the quality of each of the registered PET image data sets based on the quality measure. Moreover, in this step a final registered PET image data set is selected from the registered PET image data sets based on the quality measure. Optionally, the method 300 can further comprise a step 360 in which based on the final registered PET image data set, a final PET image is generated by merging the final registered PET images.

An acquisition of a PET image, in particular, a whole body PET image, can take up to 20 minutes or more, such that it is not possible to acquire the PET data, from which a PET image is reconstructed, without avoiding, for instance, breathing motions of the patient. Thus, if from the acquired PET data a 3D PET image is reconstructed from all measured PET data, the PET image suffers significantly from breathing artifacts. Reconstructing a 3D PET image based only on a subset of the PET data, for example, only on a subset of the PET data that corresponds to an end-exhale phase of a breathing motion, can largely reduce breathing artifacts. However, due to the reduced amount of PET data that can be used in this case, the signal-to-noise ratio and thus the image quality is largely reduced. In order to keep a good signal-to-noise ratio and at the same time to avoid breathing artifacts, it is generally known to separate the PET data into a plurality of motion gates each corresponding to a different motion phase of the breathing motion, wherein then for each of these gates, 3D PET images are reconstructed which are substantially free of breathing motion.

From these 3D PET images, motion vector fields indicative of the motion between each motion gate can be extracted by utilizing known registration algorithms and based on the motion vector fields an overall motion-compensated 3D PET image can be obtained that encompasses all PET data. For the motion compensation, for instance, all PET images can be registered to one chosen reference PET image referring to one chosen reference motion gate, for instance, the motion gate corresponding to the end-exhale motion phase of the breathing motion, and then averaged over all registered PET images.

Generally, due to the already mentioned lack of anatomical context in PET images, a registration of PET images can be very challenging. Known registration algorithms generally use anatomical context, for instance, of the lung of a patient, to detect the breathing motion, i.e. the changes between the PET images that should be registered. But, in particular, with respect to the lung, PET images show only very few structures, for instance, often only the diaphragm, that can be used to guide the registration algorithm. Thus, for PET image registration, often registration algorithms are utilized that try to extrapolate a motion from the visible structures to the non-visible structures and try to correct based on this extrapolation the motion in areas in which no structures are visible. For cases, in which the patient comprises a substantially healthy lung, this approach can be very helpful, since for these cases breathing can be regarded as a substantially linear movement. However, in cases in which a patient is in pain, has stiffened lung tissue, for instance, because of an emphysema, suffers from a pneumothorax or other pathologies, the movement of the lung strongly differs from a linear movement and the above outlined method results in an inaccurate registration result. These inaccuracies affect especially small lesions in lung tissue which are not big enough to have an impact on the registration algorithm and become thus less visible in an overall PET image generated from the registered PET images than in each registered PET image for each motion sate.

Thus, the present invention, as described above, provides a device and method that allow for a more accurate registration of PET images corresponding to different motion gates and thus leads to a PET image with an improved image quality, wherein the invention is, for instance, based on the general idea of initializing a registration between PET images of a PET image data set by using a motion-type model. The motion-type model can comprise a deformation model, e.g., a deformation vector field, and yields a better starting point for the registration. Moreover, several motion-type models representing different types of motion, like abdominal or chest breathing motion, can be used for the initialization and the best registration result can be chosen as the final result.

Although in the above embodiments mainly examples were provided that refer to the region of interest as being a lung of the patient, in other embodiments the region of interest can also refer to any other region of interest that suffers from motion during a PET image data acquisition, for instance, to a heart of the patient, an abdomen of the patient, etc. Moreover, although in the above embodiments a plurality of motion states were identified, for the acquired PET data set, resulting in a motion gated PET data set, in other embodiments only two or three motion states can be identified.

Although in the above embodiments the apparatus for registering PET images was part of a PET imaging system, in other embodiments the apparatus can also be a standalone apparatus to which the PET image data is provided, for instance, using known data transmission systems.

Although in the above embodiments the motion-type model comprises a motion vector field and/or images of the region of interest at different motion states, in other embodiments the motion type model can comprise additionally or alternatively a transformation matrix or vector indicative of a rigid or affine transformation between at least two motion states. For example, instead of motion vector fields *m^{J}_{b}* described above also transformation matrices can be provided, wherein the transformation matrices are then provided such that an application of a transformation matrix to an image in a first motion state transforms the image to an image corresponding to a second motion state. In particular, the application of the transformation matrix can refer to a matrix multiplication of the matrix with the image represented in form of an image value vector.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of the PET image data set, the providing of the motion-type models, the adapting of the motion-type models, the applying of the motion-type models and/or the determining of the quality of the registered PET image data sets, etc., performed by one or several units or devices can be performed by any other number of units or devices. These procedures can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention refers to an apparatus for registering PET images. The apparatus comprises a) a providing unit for providing a PET image data set, b) another providing unit for providing two motion-type models comprising information on motions following different motion patterns, c) an adapting unit for adapting each of the two motion-type models to an image of the PET image data set, d) an applying unit for applying each of the two adapted motion-type models to the PET image data set resulting in a registered PET image data set, and f) a determination unit for determining for each of the two motion models the registration quality of the registered PET image data set, wherein a final registered PET image data set is selected based on the quality. Thus, the invention provides an apparatus that allows for providing a PET image with an improved image quality.

## Claims

1. An apparatus for registering positron emission tomography (PET) images, wherein the apparatus (110) comprises:
- a PET image data set providing unit (111) configured to provide a PET image data set comprising at least two PET images of a region of interest of a patient (121), wherein the PET image data set has been obtained by reconstructing a PET data set acquired at at least two motion states of the region of interest such that each PET image of the PET image data set corresponds to a motion state of the region of interest,
- a motion-type model providing unit (112) configured to provide at least two motion-type models, wherein a motion-type model comprises information on a motion of the region of interest, and wherein each motion-type model comprises information on a motion following a different motion pattern,
- a motion-type model adapting unit (113) configured to adapt each of the at least two motion-type models to at least one of the PET images of the PET image data set,
- a motion-type model applying unit (114) configured to apply each of the at least two adapted motion-type models to the PET image data set resulting in a registered PET image data set for each motion-type model, wherein the applying of a motion-type model comprises registering the PET images of the PET image data set to each other based on the information on the motion of the region of interest provided by the respective adapted motion-type model and results in a registered PET image data set, and
- a registration quality determination unit (115) configured to determine for each of the at least two motion models the registration quality of the respective registered PET image data set, wherein the quality determination is based on a quality measure determined based on the respective registered PET image data set, wherein a final registered PET image data set is selected from the registered PET image data sets based on the quality measure.

2. The apparatus according to claim 1, wherein a motion-type model comprises as information on the motion in the region of interest a motion vector field defining a positional translation between at least two different motion states of the region of interest, wherein applying a motion-type model to the PET image data set comprises registering the PET images of the PET image data set to each other by initializing the registration with the motion vector field provided by the motion-type model.

3. The apparatus according to any of claims 1 and 2, wherein the adapting of the motion-type model to at least a PET image of the PET image data set comprises adapting the size of the region of interest in the motion-type model to the size of the region of interest in the at least one PET image of the PET image data set.

4. The apparatus according to any of the preceding claims, wherein the adapting of the motion-type model to at least a PET image of the PET image data set comprises registering the motion-type model to the at least one PET image of the PET image data set.

5. The apparatus according to any of the preceding claims, wherein the adapting of the motion-type model to at least a PET image of the PET image data set is based on registering the motion-type model to an anatomical image of the region of interest of the patient (121).

6. The apparatus according to any of the preceding claims, wherein the quality measure is determined based on a residual image determined by subtracting a registered image of the registered PET image data set from another of the registered PET images of the registered PET image data set.

7. The apparatus according to any of the preceding claims, wherein the motion-type model comprises a motion vector field and the quality measure refers to a deviation between the motion vector field of the motion-type model and a motion vector field derived during the registration process of the PET image data set.

8. The apparatus according to any of the preceding claims, wherein the quality measure is indicative of changes of a number and/or size of lesions in the region of interest during a generation process generating an overall PET image from the registered PET image data set.

9. The apparatus according to any of the preceding claims, wherein the apparatus (110) further comprises a motion-type model selection unit for selecting the at least two motion-type models from a plurality of motion-type models, wherein the selection is based on known patient characteristics.

10. The apparatus according to any of the preceding claims, wherein the PET image data set further comprises information indicative of a gating signal defining the different motion states of the region of interest, and wherein the motion-type model comprises information on positional transitions between at least two different motion states, wherein the application of a motion-type model to the PET image data set is further based on the information indicative of the gating signal.

11. The apparatus according to any of the preceding claims, wherein the area of interest is a lung of a patient (121) and the motion patterns refer to different breathing patterns.

12. The apparatus according to claim 11, wherein the different breathing patterns refer to at least one of an abdominal breathing pattern, a chest breathing pattern, a shallow breathing pattern, and a deep breathing pattern.

13. A PET imaging system for providing a PET image, wherein the system (100) comprises:
- a PET imaging unit (120) adapted to acquire a PET data set at at least two motion states of a region of interest of a patient (121),
- a PET image reconstructing unit adapted for reconstructing from the PET data set a PET image data set such that each PET image of the PET image data set corresponds to a motion state of the region of interest, and
- an apparatus (110) for registering the PET images of the PET image data set according to claim 1.

14. A method for registering PET images, wherein the method (300) comprises:
- providing a PET image data set (310) comprising at least two PET images of a region of interest of a patient (121), wherein the PET image data set has been obtained by reconstructing a PET data set acquired at at least two motion states of the region of interest such that each PET image of the PET image data set corresponds to a motion state of the region of interest,
- providing (320) at least two motion-type models, wherein a motion-type model comprises information on a motion of the region of interest, and wherein each motion-type model comprises information on a motion following a different motion pattern,
- adapting (330) each of the at least two motion-type models to at least one of the PET images of the PET image data set,
- applying (340) each of the at least two adapted motion-type models to the PET image data set resulting in a registered PET image data set for each motion-type model, wherein the applying of a motion-type model comprises registering the PET images of the PET image data set to each other based on the information on the motion of the region of interest provided by the respective adapted motion-type model and results in a registered PET image data set, and
- determining (350) for each of the at least two motion models a registration quality of the respective registered PET image data set, wherein the quality determination is based on a quality measure determined based on the respective registered PET image data set, wherein a final registered PET image data set is selected from the registered PET image data sets based on the quality measure.

15. A computer program product for registering PET images, wherein the computer program product comprises program code means for causing the apparatus of claim 1 to execute the method according to claim 14.
